# EUROPÄISCHE PATENTSCHRIFT

(11) **EP 0 580 839 B1**
(45) Veröffentlichungstag und Bekanntmachung des Hinweises auf die Patenterteilung: **10.07.1996**
(21) Anmeldenummer: 93903699.2
(22) Anmeldetag: 12.02.1993
(51) Int. Cl.: B29C 69/02

(54) **VERFAHREN UND VORRICHTUNG ZUM ANPASSEN VON BAUTEILEN**
METHOD AND DEVICE FOR PRODUCING A MATCHING FIT BETWEEN COMPONENTS
PROCEDE ET DISPOSITIF POUR L'ADAPTATION D'ELEMENTS

(30) Priorität: 14.02.1992 AT 255/92
(43) Veröffentlichungstag der Anmeldung: 02.02.1994
(73) Patentinhaber: ERNST POLLMANN UHREN- U.APPARATEBAU OHG, A-3822 Karlstein/Thaya (AT)
(72) Erfinder: POLLMANN, Herbert, A-3822 Karlstein/Thaya (AT)
(74) Vertreter: Brauneiss, Leo, Dipl.Ing.
(86) Internationale Anmeldenummer: AT9300020
(87) Internationale Veröffentlichungsnummer: WO9315901

(56) Entgegenhaltungen:
- DE-A- 1 479 416
- DE-A- 2 209 318
- DE-B- 1 479 246

## Beschreibung

Die Erfindung betrifft ein Verfahren zum, insbesondere dichtenden, Anpassen von Bauteilen hinsichtlich ihrer gegenseitigen Abmessungen, wobei zumindest einer der Bauteile aus einem Kunststoffmaterial besteht. Ferner betrifft die Erfindung eine Vorrichtung zur Durchführung eines solchen Verfahrens.

Häufig besteht das Problem, zwei Bauteile hinsichtlich ihrer Abmessungen aneinander anzupassen, insbesondere um eine Abdichtung zwischen diesen Bauteilen zu erzielen. So muß beispielsweise bei einem Ventil der Ventilteller an den in einem Gehäuse vorgesehenen Ventilsitz und bei einer Drosseleinrichtung für Kraftfahrzeugeinspritzeinheiten die Drosselklappe an die Innenabmessungen eines Zylinders angepaßt werden.

Es ist bekannt, solche Bauteile aus Metall, beispielsweise aus Aluminium-Druckguß, herzustellen und die Anpassung dieser Bauteile durch spanabhebende Bearbeitung vorzunehmen. Nachteilig ist hiebei nicht nur die Herstellung der Bauteile aus einem teuren Material, sondern auch die aufwendige Bearbeitung derselben, um die erforderliche Dichtwirkung zu erzielen.

Man hat daher bereits vorgeschlagen, als Material anstelle von Metall Kunststoff zu verwenden und die Bauteile im Spritzgußverfahren herzustellen. Nachteilig ist jedoch, daß infolge der dabei unvermeidlich auftretenden Materialschwindung und des nach dem Ausformen auftretenden Verzuges der Bauteile Abweichungen gegenüber den vorgegebenen Formen und Abmessungen auftreten, wodurch die erforderlichen gegenseitigen Abmessungen dieser Bauteile nicht mehr gegeben sind und wodurch insbesondere eine einwandfreie Dichtwirkung zwischen diesen Bauteilen nicht mehr gewährleistet ist. Aus diesem Grunde hat sich der Ersatz der aus Metall bestehenden Bauteile durch Kunststoffbauteile, wenn an diese insbesondere hinsichtlich der Dichtwirkung höhere Anforderungen gestellt werden, bisher nicht durchsetzen können.

Aus der DE-A-1,479.416 ist bereits ein Verfahren zur Herstellung einer Schraubverbindung bekannt geworden, bei welchem das Schraubgewinde in einem aus Kunststoff bestehenden Schaft dadurch hergestellt wird, daß dieser Schaft in die Gewindebohrung eines Gehäuses hineingedreht und dadurch in den Kunststoff ein Gewinde hineingedrückt wird. Eine exakte, insbesondere dichtende, Anpassung der gegenseitigen Abmessungen von Bauteilen verschiedener Formgebung läßt sich mit dieser bekannten Vorgangsweise nicht erzielen, insbesondere auch deshalb nicht, da der Kunststoff lediglich durch Ausübung eines Druckes nicht exakt in eine vorbestimmte Gestalt gebracht werden kann.

Die vorliegende Erfindung hat sich zur Aufgabe gestellt, diese Nachteile zu vermeiden und ein Verfahren sowie eine Vorrichtung zum, insbesondere dichtenden, Anpassen von Bauteilen hinsichtlich ihrer gegenseitigen Abmessungen zu schaffen, wobei zumindest einer dieser Bauteile aus einem Kunststoffmaterial besteht, und wobei diese Bauteile auf einfache und kostensparende Weise nachträglich so verformt werden, daß eine exakte gegenseitige Anpassung erfolgt, insbesondere eine Dichtwirkung gegeben ist. Zur Lösung dieser Aufgabe schlägt das erfindungsgemäße Verfahren vor, daß die anzupassenden Bauteile in ihrer Betriebslage vormontiert werden, daß wenigstens ein aus thermoplastischem Kunststoffmaterial bestehender Bauteil, zumindest im Anpassungsbereich, erwärmt wird und/oder einer Ultraschall- bzw. Hochfrequenz- bzw. Lasereinwirkung unterworfen wird, und hierauf zumindest im Anpassungsbereich durch Druckeinwirkung derart verformt wird, daß die beiden Bauteile aneinander angepaßt sind. Dadurch, daß der durch Druckeinwirkung verformte Bauteil vor der Ausübung des Druckes erwärmt und/oder einer Ultraschall- bzw. Hochfrequenz- bzw. Lasereinwirkung unterworfen wird, erfolgt vor der Verformung eine Plastifizierung dieses zu verformenden Bauteiles zumindest im Anpassungsbereich, so daß durch die nachfolgende Druckeinwirkung das plastifizierte Material zwischen den beiden Bauteilen vorhandene Spalte vollständig und ohne Bildung von Lufteinschlüssen oder dergleichen ausfüllt und sich am jeweils anderen Bauteil anlegt, der, da ja die Bauteile in ihrer Betriebslage vormontiert sind, eine Begrenzung für das plastifizierte Material darstellt, sodaß sich dieses genau den Abmessungen anpaßt, wobei Formfehler und Spalte ausgeglichen werden und die geforderte Dichtheit gewährleistet ist.

Da das erfindungsgemäße Verfahren bei den bereits vormontierten Bauteilen angewendet wird, ist eine nachträgliche Bearbeitung nicht erforderlich.

Es ist bereits bekannt, Bauteile aus thermoplastischem Kunststoffmaterial durch Anwendung von Ultraschall, Hochfrequenz und/oder Lasereinwirkung miteinander zu verschweißen. Eine Plastifizierung dieses Kunststoffmateriales zum Zwecke der Anpassung eines aus diesem Kunststoffmaterial gebildeten Bauteiles an einen anderen Bauteil ist jedoch bisher nicht vorgeschlagen worden.
Bei Anwendung des erfindungsgemäßen Verfahrens muß dafür Sorge getragen werden, daß bei einem Plastifizieren des Kunststoffmaterials durch Erwärmen oder durch Ultraschall, Hochfrequenz und/oder Laserstrahlen ein unerwünschtes Verschmelzen der beiden Bauteile verhindert wird. Dies kann beispielsweise dadurch erzielt werden, daß für die Bauteile Materialien mit verschiedenem Schmelzpunkt verwendet werden, sodaß das eine Material bereits plastisch wird, wenn das andere Material noch fest ist, und sich daher die beiden Materialien nicht miteinander verbinden.

Es ist aber auch möglich, auf zumindest einem der beiden Bauteile vor dem Erwärmen bzw. vor der Ultraschall-, Hochfrequenz- und/oder Lasereinwirkung im Anpassungsbereich ein Trennmedium aufzubringen, welches eine Verschweißung der beiden Bauteile miteinander verhindert. Als Trennmedium können hiebei Metall- oder Kunststoffolien und/oder eine Metall- oder Kunststoffbeschichtung und/oder ein Trennlack verwendet werden. Wesentlich ist dabei, daß das Trennmedium nicht dicker ist als es die erforderliche Dichtheit vorschreibt.

Eine Vorrichtung zum, insbesondere dichtenden, Anpassen von Bauteilen hinsichtlich ihrer gegenseitigen Abmessungen, wobei zumindest einer der Bauteile aus einem Kunststoffmaterial besteht, ist dadurch gekennzeichnet, daß eine Abstützung und wenigstens ein Druckstempel vorgesehen sind, wobei sich der Anpassungsbereich eines der in der Betriebslage vormontierten Bauteile zwischen der Abstützung und dem Druckstempel befindet und Abstützung und Druckstempel relativ zueinander bewegbar angeordnet und die Abstützung und/oder der Druckstempel mit einer Heizeinrichtung und/oder einer Ultraschall- bzw. Hochfrequenz- bzw. Laserstrahlquelle versehen sind. Bei Anwendung dieser Vorrichtung wird der anzupassende, in der Betriebslage vormontierte Bauteil zwischen der Abstützung und dem Druckstempel angeordnet, worauf durch eine Verschiebung beispielsweise des Druckstempels auf den zwischen dem Druckstempel und der Abstützung befindlichen Bauteil ein Druck ausgeübt wird, wodurch die vorhandenen Hohlräume zwischen den beiden anzupassenden Bauteilen ausgeglichen und Formfehler beseitigt werden. Durch die Heinzeinrichtung und/oder Ultraschall- bzw. Hochfrequenz- bzw. Laserstrahlquelle wird das Kunststoffmaterial plastifiziert, sodaß es in die vorhandenen Spalte bzw. Hohlräume einzudringen vermag und diese vollständig ausfüllt. Bei Verwendung einer Heizeinrichtung wird eine Erwärmung und daher Plastifizierung des thermoplastischen Kunststoffmateriales zumindest im Anpassungsbereich bewirkt. Durch die Ultraschall- bzw. Hochfrequenz- bzw. Laserstrahlquelle wird der anzupassende , aus thermoplastischem Kunststoffmaterial gebildete Bauteil in Schwingungen versetzt, die eine lokale Plastifizierung des Kunststoffmaterials im gewünschten Bereich bewirken.

Um sicherzustellen, daß vorhandene Spalte, Hohlräume od. dgl. zwischen den beiden anzupassenden Bauteilen vollständig ausgefüllt und Formfehler ausgeglichen werden, muß für eine hinreichende Verdrängung des plastifizierten Kunststoffmateriales Sorge getragen werden. Zu diesem Zweck sind die Abstützung und/oder der Druckstempel und/oder der aus Kunststoffmaterial bestehende Bauteil im Anpassungsbereich mit einem, vorzugsweise schneidenförmigen, Vorsprung versehen. Befindet sich der Vorsprung auf der Abstützung oder am Druckstempel, so wird das im Bereich dieses Vorsprunges befindliche Material verdrängt, wodurch zwar die Materialstärke des anzupassenden Bauteiles verringert wird, jedoch das für den Anpassungsvorgang erforderliche Material mit Sicherheit zur Verfügung steht. Befindet sich der Vorsprung am anzupassenden Bauteil im Anpassungsbereich, so wird bei einer Druckausübung auf das Kunststoffmaterial der Vorsprung zumindest teilweise eingeebnet und das Material in die auszufüllenden Spalte od.dgl. verdrängt.

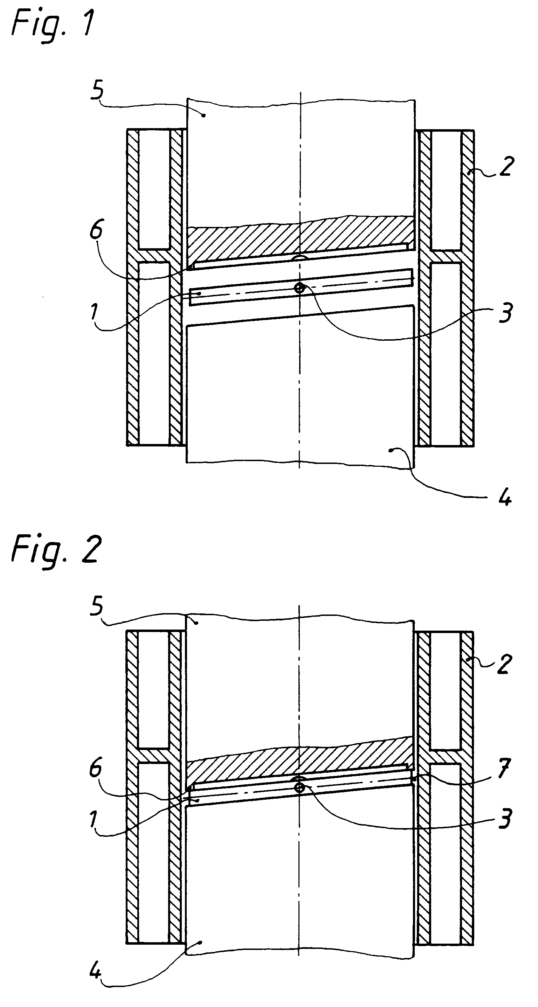

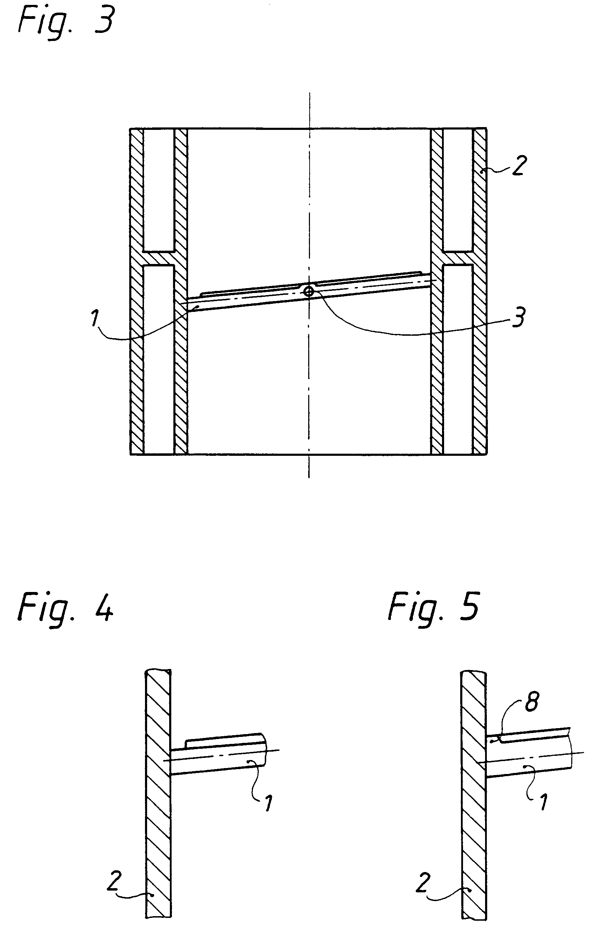

In der Zeichnung ist die Erfindung anhand eines Ausführungsbeispieles schematisch veranschaulicht. Fig.1 zeigt im Schnitt eine in einem zylinderförmigen Bauteil angeordnete, hinsichtlich der Abmessungen anzupassende Klappe zusammen mit der erfindungsgemäßen Vorrichtung vor dem Anpassungsvorgang. Fig.2 zeigt in einer Darstellung entsprechend Fig.1 die Bauteile während des Anpassungsvorganges und Fig.3 nach dem Anpassungsvorgang. Die Fig.4 und 5 stellen zwei Ausführungsvarianten eines Details in Fig.3 dar.

Das Ausführungsbeispiel zeigt eine Drosselklappe 1, die in einem zylinderförmigen Bauteil 2 um eine Achse 3 schwenkbar gelagert ist. Derartige Bauteile werden beispielsweise bei Kraftstoffeinspritzeinheiten verwendet. Werden die Drosselklappe 1 und der zylinderförmige Bauteil 2 aus thermoplastischem Kunststoffmaterial im Spritzgußverfahren hergestellt, so ergeben sich infolge von Materialschwindung und Materialverzug unvermeidliche Formfehler, eine einwandfreie Abdichtung zwischen der Drosselklappe 1 und der Innenwand des zylinderförmigen Bauteiles 2 ist somit nicht gegeben. Um eine solche einwandfreie Abdichtung zu gewährleisten, wird nach dem erfindungsgemäßen Verfahren die Drosselklappe 1 vor der Montage im zylinderförmigen Bauteil 2 mit einem Außendurchmesser hergestellt, der etwas geringer ist als der Innendurchmesser des zylinderförmigen Bauteiles, und es wird die Drosselklappe 1 nach ihrer Montage im zylinderförmigen Bauteil verformt, um sie an die Abmessungen der Innenwand dieses zylinderförmigen Bauteiles anzupassen. Hiezu werden in den zylinderförmigen Bauteil 2 auf der einen Seite der Drosselklappe 1 eine Abstützung (Amboß) 4 und auf der anderen Seite der Drosselklappe 1 ein Druckstempel 5 eingeführt. Der Druckstempel 5 ist vorzugsweise mit einer Heizeinrichtung oder mit einer Ultraschall-, Hochfrequenz- oder Laserstrahlquelle versehen. Sowohl durch die Heizeinrichtung als auch durch die Ultraschall-, Hochfrequenz- oder Laserstrahlquelle (Sonotrode), durch welch letztere die Drosselklappe 1 in Schwingungen versetzt wird, erfolgt eine Plastifizierung des Materials der Drosselklappe 1. Damit lediglich der anzupassende Randbereich dieser Drosselklappe 1 plastifiziert wird, weist der Druckstempel 5 entlang seines Umfanges einen schneidenförmigen Vorsprung 6 auf, der, wie aus Fig.2 hervorgeht, am Rand der Drosselklappe 1 zur Anlage gelangt. Durch Ausübung eines Druckes mittels des Druckstempels 5 wird das in der Kontaktzone mit dem Vorsprung 6 plastifizierte Material der Drosselklappe 1 durch Verdrängung in den zwischen dem Umfang der Drosselklappe 1 und der Innenwand des zylindrischen Bauteiles 2 befindlichen Spalt eingedrückt, wie dies in Fig.2 bei 7 ersichtlich ist. Je nach Abweichung von den Sollmaßen fließt mehr oder weniger des plastifizierten Materialvolumens in den vorhandenen Spalt und füllt diesen vollständig aus, so daß die erforderliche Dichtheit gewährleistet ist.

Um ein unerwünschtes Verbinden zwischen dem plastifizierten Material der Drosselklappe 1 und dem zylinderförmigen Bauteil 2 zu verhindern, können für diese Bauteile verschiedene Materialien Verwendung finden. So kann beispielsweise die Drosselklappe 1 aus Polybutylen-Terephtalat bestehen, der zylindrische Bauteil 2 hingegen aus Polyamid mit 40-%iger Mineralfüllung. Das Material der Drosselklappe 1 weist dann einen geringeren Schmelzpunkt auf als das Material des zylinderförmigen Bauteiles 2.

Es kann aber auch auf die Innenfläche des zylinderförmigen Bauteiles 2 im Bereich der Drosselklappe 1 und/oder im Umfangsbereich dieser Drosselklappe 1 ein Trennmedium aufgebracht werden, welches eine Verbindung zwischen Drosselklappe 1 und zylinderförmigem Teil 2 während der Plastifizierung verhindert. Ein solches Trennmedium kann beispielsweise aus einer Beschichtung der Innenseite des zylinderförmigen Bauteiles 2 mit PTFE gebildet sein. Es können aber auch Kunststoff- oder Metallfolien, Trennlack od.dgl. verwendet werden, die auf einem der beiden Bauteile 1,2 aufgebracht werden. Wesentlich ist hiebei, daß diese Folien, Lacke, Beschichtungen und dgl. nicht dicker sind, als es die erforderliche Dichtheit vorschreibt.

In Fig.3 ist der Endzustand nach erfolgter Wiederverfestigung des Anpassungsbereiches dargestellt. Wie ersichtlich, ist in diesem Anpassungsbereich die Dicke der Drosselklappe 1 verringert, da von dort Material mittels des schneidenförmigen Vorsprunges 6 in die Zwischenräume bzw. Spalte verdrängt wurde. In Fig.4 ist dieser Anpassungsbereich in größerem Maßstab dargestellt.

Fig.5 zeigt eine abgewandelte Ausführungsform, bei welcher der Druckstempel 5 keine Vorsprünge 6 aufweist. Vielmehr ist bei dieser Ausführungsform die Drosselklappe 1 entlang ihres Umfanges mit einem Vorsprung versehen, es ist somit dort eine Materialanhäufung vorgesehen, die nach erfolgter Druckausübung zumindest zum Teil für das Ausfüllen der Durchmesserabweichungen, Spalte od.dgl. verwendet wird. Diese Materialanhäufung ist in Fig.5 bei 8 ersichtlich.

Selbstverständlich kann auch die Abstützung bzw. der Amboß 4 mit abstehenden Vorsprüngen entsprechend den Vorsprüngen 6 versehen sein, in welchem Fall die Unterseite des Druckstempels 5 zweckmäßig eben, also ohne Vorsprünge ausgebildet ist.

Weiters ist es auch möglich, nicht die Drosselklappe 1, sondern den zylindrischen Bauteil 2 im Anpassungsbereich durch Druckausübung, insbesondere nach vorheriger Plastifizierung, zu verformen und mit einem Teil des durch die Druckausübung verlagerten Materiales die Durchmesserabweichungen auszugleichen bzw. die Spalte auszufüllen. In diesem Fall werden Abstützung und Druckstempel an der Außenseite und an der Innenwand des zylindrischen Bauteiles 2 angeordnet, und zwar zweckmäßig zunächst auf der einen Seite der Drosselklappe 1 und dann auf der gegenüberliegenden Seite der Drosselklappe 1.

Die vorliegende Erfindung ist nicht auf die Anwendung beim beschriebenen Ausführungsbeispiel beschränkt. Eine Anpassung kann auch bei anders geformten und anders angeordneten Bauteilen erfolgen und zwar bei beliebigen Spaltbreiten und beliebiger Anordnung der Bauteile relativ zueinander. Insbesondere ist es nicht erforderlich, daß die Bauteile einen kreisringförmigen Querschnitt aufweisen.

## Patentansprüche

1. Verfahren zum, insbesondere dichtenden, Anpassen von Bauteilen hinsichtlich ihrer gegenseitigen Abmessungen, wobei zumindest einer der Bauteile aus einem Kunststoffmaterial besteht, dadurch gekennzeichnet daß die anzupassenden Bauteile (1,2) in ihrer Betriebslage vormontiert werden, daß wenigstens ein aus thermoplastischem Kunststoffmaterial bestehender Bauteil (1), zumindest im Anpassungsbereich, erwärmt wird und/oder einer Ultraschall- bzw. Hochfrequenz- bzw. Lasereinwirkung unterworfen wird und hierauf, zumindest im Anpassungsbereich, durch Druckeinwirkung derart verformt wird, daß die beiden Bauteile aneinander angepaßt sind.

2. Verfahren nach Anspruch 1, dadurch gekennzeichnet, daß für die Bauteile (1,2) Materialien mit verschiedenem Schmelzpunkt verwendet werden.

3. Verfahren nach Anspruch 1, dadurch gekennzeichnet, daß auf zumindest einem der beiden Bauteile (1,2) vor dem Erwärmen und/oder vor der Ultraschall- bzw. Hochfrequenz- bzw. Lasereinwirkung im Anpassungsbereich ein Trennmedium aufgebracht wird.

4. Verfahren nach Anspruch 3, dadurch gekennzeichnet, daß als Trennmedium Metall- oder Kunststoff-Folien und/oder eine Metall- oder Kunststoffbeschichtung und/oder ein Trennlack verwendet werden.

5. Vorrichtung zum, insbesondere dichtenden, Anpassen von Bauteilen hinsichtlich ihrer gegenseitigen Abmessungen, wobei zumindest einer der Bauteile aus einem Kunststoffmaterial besteht, dadurch gekennzeichnet, daß eine Abstützung (4) und wenigstens ein Druckstempel (5) vorgesehen sind, wobei sich der Anpassungsbereich eines der in der Betriebslage vormontierten Bauteile (2) zwischen der Abstützung (4) und dem Druckstempel (5) befindet, und wobei Abstützung und Druckstempel relativ zueinander bewegbar angeordnet und die Abstützung und/oder der Druckstempel mit einer Heizeinrichtung und/oder einer Ultraschall- bzw. Hochfrequenz- bzw. Laserstrahlquelle versehen sind.

6. Vorrichtung nach Anspruch 5, dadurch gekennzeichnet, daß die Abstützung (4) und/oder der Druckstempel (5) und/oder der aus thermoplastischem Material bestehende Bauteil (3) im Anpassungsbereich mit einem, vorzugsweise schneidenförmigen, Vorsprung (6) versehen sind.

## Claims

1. A method for the fitting, and in particular the sealed fitting, of components with respect to their mutual dimensions, wherein at least one of the components consists of a plastics material, **characterized in that the** components (1, 2) to be fitted are pre-assembled in their operative position, at least one component (1) consisting of thermo-plastic material is heated and/or is subjected to ultrasonic or high-frequency or laser action, at least in the fitting area, and after that is deformed by the action of pressure, at least to the fitting area, in such a way that the two components fit together.

2. A method according to Claim 1, **characterized in that** materials with different melting points are used for the components (1, 2).

3. A method according to Claim 1, **characterized in that** a separating medium is applied to at least one of the two components (1, 2) in the fitting area before the heating and/or before the ultrasonic or high-frequency or laser action.

4. A method according to Claim 3, **characterized in that** metallic or plastic foils and/or a metallic or plastics coating and/or a separating lacquer are used as the separating medium.

5. A device for the fitting, and in particular the sealed fitting, of components with respect to their mutual dimensions, wherein at least one of the components consists of a plastics material, **characterized in that** a support (4) and at least one pressure piston (5) are provided, wherein the fitting area of one of the components (2) pre-assembled in the operative position is situated between the support (4) and the pressure piston (5), and wherein the support and the pressure piston are arranged so as to be movable relative to each other, and the support and/or the pressure piston are provided with a heating device and/or an ultrasonic or high-frequency or laser-beam source.

6. A device according to Claim 5, **characterized in that** the support (4) and/or the pressure piston (5) and/or the component (3) consisting of thermoplastic material are provided in the fitting area with a preferably blade-shaped projection (6).

## Revendications

1. Procédé pour la, en particulier étanchante, adaptation d'éléments en vue de leurs dimensions mutuelles, au moins un des éléments consistant en matiere plastique, caractérisé en ce que les éléments (1,2) à adapter sont prémontés dans leur position de service, qu'au moins un des éléments (1) en matière thermoplastique est chauffé au moins dans la région d'adaptation et/ou soumis à un effet d'ultra-son, de haute fréquence ou de laser et est ensuite, au moins dans la région d'adaptation, déformé par pression de manière que les deux éléments sont adaptés l'un à l'autre.

2. Procédé selon la revendication 1, caractérisé en ce que des matériaux de points de fusion différents sont utilisés pour les éléments (1,2).

3. Procédé selon la revendication 1, caractérisé en ce qu'un agent séparateur est appliqué dans la région d'adaptation sur au moins un des deux éléments (1,2) avant le chauffage et/ou l'effet d'ultra-son, de haute fréquence ou de laser.

4. Procédé selon la revendication 1, caractérisé en ce que l'agent séparateur utilisé sont des feuilles de métal ou de matière plastique et/ou un revêtement en métal ou en matière plastique et/ou un vernis séparateur.

5. Dispositif pour la, en particulier étanchante, adaptation d'éléments en vue de leurs dimensions mutuelles, au moins un des éléments consistant en une matière plastique, caractérisé en ce qu'un support (4) et au moins un moule d'impression (5) sont pourvus, la région d'adaptation d'un des éléments (2) prémontés dans la position de service étant située entre le support (4) et le moule d'impression (5), le support et le moule d'impression disposés mobiles l'un par rapport à l'autre et le support et/ou le moule d'impression étant pourvus d'un moyen de chauffage et/ou d'une source d'ultra-son, de haute fréquence ou de rayons laser.

6. Dispositif selon la revendication 5, caractérisé en ce que le support (4) et/ou le moule d'impression (5) et/ou l'élément (3) en matière thermoplastique sont pourvus dans la région d'adaptation d'une saillie (6) de préférence en forme de taillant.
